(19)

Europäisches
Patentamt
European
Patent Office
Office européen
des brevets

(11) **EP 3 835 985 A1**

(12) **DEMANDE DE BREVET EUROPEEN**

(43) Date de publication:
**16.06.2021 Bulletin 2021/24**

(51) Int Cl.:
**G06F 21/55** *(2013.01)* **G06F 21/56** *(2013.01)*
**H04L 29/06** *(2006.01)*

(21) Numéro de dépôt: **20212449.1**

(22) Date de dépôt: **08.12.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **12.12.2019 FR 1914270**

(71) Demandeur: **ORANGE**
**75015 Paris (FR)**

(72) Inventeur: **SEDJELMACI, Hichem**
**92326 CHÂTILLON CEDEX (FR)**

(54) **PROCÉDÉ DE SURVEILLANCE DE DONNÉES TRANSITANT PAR UN ÉQUIPEMENT UTILISATEUR**

(57) Le procédé de surveillance des données comprend :
- l'obtention (E20,E30) d'une première décision d'une première technique de détection (TDA1) d'attaques informatiques et d'une deuxième décision d'une deuxième technique de détection (TDA2) d'attaques informatiques, indiquant si les données sont associées à un trafic d'attaque ;
- l'obtention (E40,E60) d'une troisième décision d'une troisième technique de détection d'attaques informatiques (TDA3) indiquant si les données sont associées à un trafic d'attaque, la troisième technique les première et deuxième décisions et des niveaux de confiance (RL1,RL2) attribués auxdites première et deuxième techniques de détection ;
- la mise à jour (E70) des niveaux de confiance en fonction des première, deuxième et troisième décisions ; et
- l'adaptation (E100), déclenchée en fonction des première, deuxième et troisième décisions obtenues et des niveaux de confiance mis à jour, d'au moins une règle appliquée par la première et/ou ladite deuxième technique.

[Fig. 3]

EP 3 835 985 A1

**Description**

**Technique antérieure**

L'invention se rapporte au domaine général des télécommunications.

Elle concerne plus particulièrement la détection d'attaques informatiques (ou « cyber-attaques ») dans un réseau de communications.

Aucune limitation n'est attachée à la nature du réseau. L'invention s'applique toutefois de façon privilégiée aux réseaux mobiles, et notamment aux réseaux mobiles de cinquième génération ou réseaux mobiles 5G.

Les réseaux mobiles 5G, avec les techniques de communication avancées qu'ils mettent en oeuvre et les capacités nouvelles qu'ils offrent en matière notamment de débits, de volumes d'information et de connexion, ouvrent des perspectives d'usage inédites qui posent de véritables challenges en termes de cyber sécurité. Au cours des années précédentes, de nombreuses techniques de détection d'intrusion (ou IDS pour « Intrusion Detection Systems » en anglais) et de défense ont été développées, s'appuyant sur des approches proactives permettant d'une part, d'anticiper et de réduire les vulnérabilités dans les systèmes informatiques, et d'autre part, de déclencher des réactions de mitigation efficaces lorsque des attaques ou des intrusions sont détectées dans ces systèmes informatiques.

Les techniques de détection d'intrusion s'appuient en général sur deux types d'approches pour détecter des cyber-attaques :

- la détection basée sur des signatures : le comportement des données surveillées, est comparé à celui attendu en présence d'attaques connues. Plus particulièrement, on associe à chaque attaque connue, un ensemble de valeurs de caractéristiques représentatives du trafic de cette attaque et permettant de le distinguer, que l'on appelle aussi communément signatures. Les mêmes caractéristiques sont extraites des données surveillées et comparées aux signatures des attaques. Cette approche permet de limiter le taux de faux positifs, c'est-à-dire des données identifiées comme étant associées à un trafic d'attaque alors qu'elles n'en sont pas. Toutefois, elle ne permet de détecter que des attaques déjà connues ;

- la détection d'anomalies : cette approche s'appuie sur la construction, par exemple au moyen d'un algorithme d'apprentissage automatique supervisé ou non supervisé, d'un modèle de comportement normal des données, c'est-à-dire en l'absence de cyber-attaques. Si les données ne sont pas conformes à ce modèle, une anomalie est détectée. L'avantage de cette approche est qu'elle permet de détecter de nouvelles attaques. En revanche, elle présente un fort taux de faux positifs.

Pour remédier aux inconvénients précités, des techniques de détection dites hybrides, mettant en oeuvre les deux approches, ont été proposées. Une telle technique de détection hybride est décrite par exemple dans l'article de A. Abduvaliyev et al. intitulé « Energy Efficient Hybrid Intrusion Detection System for Wireless Sensor Networks », International Conference on Electronics and Information Engineering, 2010.

Dans l'approche retenue dans cet article, les paquets de données sont d'abord inspectés par un module de détection d'anomalies. Si le module de détection d'anomalies détecte une intrusion, les paquets de données sont transmis pour analyse à un module de détection de signatures. Les conclusions du module de détection d'anomalies et du module de détection de signatures sont alors fournies à un module de décision qui, sur la base de ces conclusions, décide en appliquant un ensemble de règles prédéfinies s'il y a ou non intrusion.

Cette technique hybride conduit à un fort taux de détection et à une grande précision de détection. Elle s'appuie cependant sur l'hypothèse que les conclusions des modules de détection d'anomalies et de détection de signatures sont fiables. Or ces modules peuvent faire eux-mêmes l'objet d'une attaque informatique.

**Exposé de l'invention**

L'invention permet de remédier notamment aux inconvénients de l'état de la technique en proposant un procédé de surveillance, par un dispositif de détection d'attaques informatiques, de données transitant par un équipement utilisateur, ce procédé comprenant :

- une étape d'obtention d'au moins une première décision fournie par une première technique de détection d'attaques informatiques et une deuxième décision fournie par une deuxième technique de détection d'attaques informatiques, lesdites première et deuxième décision indiquant si lesdites données sont associées à un trafic d'attaque informatique ;
- une étape d'obtention d'une troisième décision fournie par une troisième technique de détection et indiquant si lesdites données sont associées à un trafic d'attaque informatique, ladite troisième technique de détection utilisant pour fournir ladite troisième décision, les première et deuxième décisions et des informations représentatives de niveaux de confiance attribués auxdites première et deuxième techniques de détection ;

- une étape de mise à jour des niveaux de confiance attribués aux première et deuxième techniques de détection en fonction des première, deuxième et troisième décisions obtenues ; et
- une étape, déclenchée en fonction des première, deuxième et troisième décisions obtenues et des niveaux de confiance mis à jour, d'adaptation d'au moins une règle appliquée par ladite première et/ou ladite deuxième techniques de détection pour fournir les première et deuxième décisions.

Corrélativement, l'invention propose également un dispositif de détection d'attaques informatiques, configuré pour surveiller des données transitant par un équipement utilisateur, ce dispositif comprenant :

- un premier module d'obtention, configuré pour obtenir au moins une première décision fournie par une première technique de détection d'attaques informatiques et une deuxième décision fournie par une deuxième technique de détection d'attaques informatiques, lesdites première et deuxième décision indiquant si lesdites données sont associées à un trafic d'attaque informatique ;
- un deuxième module d'obtention, configuré pour obtenir une troisième décision fournie par une troisième technique de détection et indiquant si lesdites données sont associées à un trafic d'attaque informatique, ladite troisième technique de détection utilisant pour fournir ladite troisième décision, les première et deuxième décisions et des informations représentatives de niveaux de confiance attribués auxdites première et deuxième techniques de détection ;
- un module de mise à jour, configuré pour mettre à jour les niveaux de confiance attribués aux première et deuxième techniques de détection en fonction des première, deuxième et troisième décisions ; et
- un module d'adaptation, activé en fonction des première, deuxième et troisième décisions et des niveaux de confiance mis à jour, ledit module étant configuré pour adapter au moins une règle appliquée par ladite première et/ou ladite deuxième techniques de détection pour fournir les première et deuxième décisions.

Ainsi, l'invention propose de combiner les décisions fournies par une pluralité de techniques de détection distinctes (au moins deux, désignées par première et deuxième techniques de détection au sens de l'invention) en tenant compte d'un niveau de confiance attribué à ces techniques de détection. Ce niveau de confiance, compris par exemple entre 0 et 1 ou entre 0 et 100%, traduit la fiabilité (ou selon la convention considérée, l'absence de fiabilité) qu'on attribue à chaque technique de détection, et est mis à jour de façon itérative au fil des détections réalisées par la technique de détection en confrontant ces détections à d'autres décisions prises par d'autres techniques de détection. Lorsqu'une technique de détection se voit attribuer un niveau de confiance faible (par exemple, pour un niveau de confiance compris entre 0 et 1, une valeur inférieure ou égale à 0.2), cela signifie qu'elle est considérée comme peu fiable, voire qu'elle est soupçonnée d'être elle-même la cible d'une attaque informatique, de sorte qu'elle est susceptible de fournir des décisions quant à la présence ou non d'une attaque volontairement erronées. Face à une telle situation, on peut envisager de mettre en place une surveillance particulière de la technique de détection, de ne plus tenir compte de ses décisions et/ou encore de déclencher une action de mitigation de l'attaque.

Pour mettre à jour le niveau de confiance attribué à chacune des première et deuxième techniques de détection, l'invention s'appuie avantageusement sur la décision rendue par une autre technique de détection que l'on suppose préférentiellement de confiance (troisième technique de détection au sens de l'invention), à laquelle sont fournies les caractéristiques des données à surveiller, les décisions rendues par les première et deuxième (et plus le cas échéant) techniques de détection, ainsi que les niveaux de confiance courants attribués à ces première et deuxième techniques de détection. La décision rendue par la troisième technique de détection est alors comparée aux décisions fournies par les première et deuxième techniques de détection, et les niveaux de confiance sont mis à jour en fonction du résultat de cette comparaison.

On note qu'aucune limitation n'est attachée au nombre de techniques de détection considérées ni au type de techniques de détection considérées. L'invention ne se limite pas à une première, une deuxième et une troisième technique de détection, et peut être mise en oeuvre en utilisant les décisions fournies par un nombre supérieur de techniques de détection.

Préférentiellement, on choisit toutefois au moins une première technique de détection utilisant pour rendre sa décision des signatures d'attaques prédéfinies, et au moins une deuxième technique de détection utilisant un modèle de comportement normal des données, de sorte que l'invention propose une technique de détection hybride s'appuyant sur les décisions rendues par différents types de techniques de détection et bénéficie ainsi des avantages de chacune de ces techniques de détection lorsque ces dernières ne font pas l'objet d'une attaque (peu de faux positifs et un taux de détection élevé). En outre, il convient de noter que ces deux types de techniques sont complémentaires dans leurs actions de détection (elles peuvent détecter des types d'attaques différents). Toutefois, cet exemple n'est pas limitatif en soi, et on peut envisager d'autres configurations dans le cadre de l'invention.

En outre, dans un mode particulier de réalisation, la troisième technique de détection peut être sélectionnée ou protégée par un mécanisme idoine de sorte à la rendre inviolable (« tamper-proof » en anglais) ou au moins résistante (« tamper-resistant ») à un certain nombre d'attaques. Un tel mécanisme de protection consiste par exemple à implémenter la troisième technique de détection depuis un espace mémoire sécurisé comme décrit par exemple dans le document de D. Serpanos et al. intitulé « Secure Memory for embedded tamper-proof systems », 14th International Conference on Design and Technology of Integrated Systems in Nanoscale Era, April 2019.

Par ailleurs, l'invention propose avantageusement d'ajuster si nécessaire les règles mises en oeuvre par les techniques de détection considérées, en fonction de la décision fournie par la troisième technique de détection et de leur fiabilité. Un tel ajustement peut consister à corriger certaines règles, à les compléter (par exemple via des caractéristiques additionnelles représentatives du trafic d'attaque), ou encore à fournir de nouvelles règles relatives à de nouvelles attaques détectées par la troisième technique de détection et jusque-là inconnues de la première et/ou de la deuxième technique de détection.

Dans un mode particulier de réalisation, la troisième technique de détection met en oeuvre un apprentissage par renforcement. Typiquement, au cours de l'apprentissage par renforcement, des paramètres d'entrée et/ou de sortie de la troisième technique de détection peuvent être ajustés de sorte à maximiser un facteur de bénéfice (aussi appelé « payoff » en anglais) prédéfini.

Ce renforcement est mis en oeuvre préférentiellement de manière continue, et permet de rendre plus robuste et plus efficace la troisième technique de détection. Il permet en effet une mise à jour dynamique des règles utilisées par la troisième technique de détection renforçant ainsi la précision de la détection mise en oeuvre par celle-ci. En outre, grâce à ce renforcement continu, la troisième technique de détection peut ajuster et corriger une mauvaise classification en adaptant ses paramètres d'entrée et ses décisions à l'égard des attaques. Elle peut également s'adapter à une évolution dans le temps des attaques, à l'introduction de nouvelles attaques, etc.

On note que le renforcement est permis non seulement grâce aux décisions fournies par les première, deuxième et troisième techniques de détection, mais il peut également résulter d'une intervention extérieure, par exemple d'une intervention humaine (via l'apport d'éléments fournis par des experts) ou d'une entité d'un réseau auquel est connecté l'équipement utilisateur, telle que par exemple un serveur gérant une pluralité d'équipements utilisateur.

En variante, il est possible d'utiliser une troisième technique de détection basée sur un ensemble de règles prédéfinies.

Une telle technique de détection présente l'avantage d'être plus simple à mettre en œuvre.

Dans un mode particulier de réalisation, le procédé de surveillance comprend une étape de désactivation de l'utilisation par la troisième technique de détection de la décision fournie par la première, respectivement par la deuxième, technique de détection si le niveau de confiance attribué à la première, respectivement à la deuxième, technique de détection est inférieur à un premier seuil donné.

Le premier seuil est par exemple inférieur ou égal à 0.2. Toutefois cette valeur n'est donnée qu'à titre illustratif et n'est pas limitative de l'invention.

En d'autres termes, dans ce mode de réalisation, la troisième technique de détection ne tient pas compte de la décision prise par les autres techniques de détection dès lors que celles-ci ne sont pas suffisamment fiables, et laisse envisager qu'elles ne fournissent pas à dessein une détection correcte, par exemple parce qu'elles sont par exemple la cible d'une attaque.

Dans un mode particulier de réalisation, l'étape d'adaptation d'au moins une règle appliquée par la première, respectivement par la deuxième, technique de détection est déclenchée seulement si le niveau de confiance mis à jour attribué à la première, respectivement à la deuxième, technique de détection est supérieur à un deuxième seuil donné.

Autrement dit, on ne met pas à jour les règles appliquées par une technique de détection que l'on pressent comme étant la cible d'une attaque. Ceci a pour conséquence de diminuer l'efficacité de la technique de détection, et corrélativement, du niveau de confiance qui lui est attribué, puisque ses détections sont de moins en moins pertinentes. Or, comme mentionné précédemment, lorsque le niveau de confiance attribué à une technique de détection est inférieur à un seuil donné, la troisième technique de détection peut décider de ne plus considérer les décisions prises par cette technique de détection. La détection d'attaques opérée par le dispositif de détection selon l'invention est dès lors libérée de l'influence *a priori* négative de cette technique de détection potentiellement ciblée par une attaque et en laquelle la troisième technique de détection ne peut avoir confiance. La technique de détection est donc forcée de fournir des décisions plus fiables, même si elle fait l'objet d'une attaque, pour être réintégrée dans le processus de surveillance des données.

Différentes façons d'attribuer un niveau de confiance à une technique de détection peuvent être envisagées.

Ainsi par exemple, le niveau de confiance attribué à la première, respectivement à la deuxième, technique de détection peut être défini comme le ratio entre :

- une différence entre un nombre total d'attaques détectées par la première, respectivement par la deuxième, technique de détection et un nombre total de faux positifs et de faux négatifs attribués à la première, respectivement à la deuxième, technique de détection ; et

- un nombre total d'attaques détectées par la troisième technique de détection.

Dans cette variante, les décisions prises par la troisième technique de détection servent de référence et on comptabilise les « mauvaises » décisions prises par les première et deuxième techniques de détection par rapport à cette référence pour estimer la fiabilité de ces première et deuxième techniques de détection. Dès lors qu'une décision diverge de celle prise par la troisième technique de détection, elle contribue à faire baisser son niveau de confiance.

Bien entendu, cette définition du niveau de confiance n'est donnée qu'à titre illustratif et d'autres définitions peuvent être envisagées. Par exemple, le niveau de confiance peut être défini par un niveau de bonne réputation (ou inversement de mauvaise réputation), correspondant au nombre de décisions coïncidant avec les décisions émises par la troisième technique de détection (inversement distinctes des décisions émises par la troisième technique de détection). On peut également envisager une pondération des nombres de faux positifs et de faux négatifs, etc.

Il convient en outre de noter que pour faciliter l'interprétation de ce niveau de confiance, on peut le contraindre à prendre des valeurs entre 0 et 1 (ou entre 0 et 100%), en forçant par exemple les valeurs supérieures à 1 (ou supérieures à 100%) à 1 (ou à 100%) et les valeurs inférieures à 0 à 0.

Dans un mode particulier de réalisation, les étapes d'obtention, de mise à jour et le cas échéant d'adaptation sont mises en oeuvre au sein de l'équipement utilisateur, et le procédé comprend en outre :

- une étape de transmission à un serveur d'un réseau auquel est connecté ledit équipement utilisateur, configuré pour exécuter une quatrième technique de détection d'attaques informatiques, de caractéristiques représentatives desdites données sur lesquelles appliquer ladite quatrième technique de détection ;
- une étape d'obtention d'une quatrième décision fournie par ledit serveur après application de ladite quatrième technique de détection, et indiquant si lesdites données sont représentatives d'un trafic d'attaque informatique ;

l'étape de mise à jour des niveaux de confiance et le cas échéant, d'adaptation étant réalisées en fonction également de la quatrième décision.

Dans ce mode de réalisation, un serveur distant est sollicité pour exécuter une quatrième technique de détection sur des caractéristiques représentatives des données afin de déterminer si ces données appartiennent ou non à un trafic d'attaque. En d'autres termes, le procédé de surveillance n'est plus exclusivement exécuté localement sur l'équipement utilisateur mais est distribué entre l'équipement utilisateur et le serveur.

Un tel serveur placé dans le réseau dispose classiquement de davantage de ressources matérielles et/ou logicielles (mémoire, ressources de calcul, ressources énergétiques, etc.) que l'équipement utilisateur et peut mettre en oeuvre rapidement des techniques de détection plus puissantes et plus robustes que l'équipement utilisateur, comme par exemple des techniques de détection par apprentissage automatique (ou « machine learning » en anglais), etc. En outre, il dispose également d'une plus grande visibilité sur le trafic échangé sur le réseau et en particulier sur le trafic des attaques. Il peut avantageusement s'appuyer sur des informations complémentaires fournies par d'autres éléments du réseau ou connectés au réseau, comme par exemple d'autres équipements utilisateurs conformes à l'invention qu'il gère également, ou d'autres équipements adaptés à remonter au serveur diverses alertes ou logs. Un tel serveur est par exemple un serveur MEC (pour Multi-access Edge Computing en anglais) du réseau offrant des capacités de calcul, de mémoire, etc. à la périphérie du réseau, à proximité de l'équipement utilisateur. De la sorte, on réduit la latence lors des échanges entre l'équipement utilisateur et le serveur pour obtenir la quatrième décision.

La quatrième décision fournie par la quatrième technique de détection exécutée par le serveur est utilisée pour confirmer ou au contraire infirmer la troisième décision et, le cas échéant, mettre à jour les règles utilisées par les première, deuxième et/ou troisième techniques de détection en cas par exemple de détection d'une attaque inconnue jusqu'alors de ces trois techniques de détection. Elle offre la possibilité de réagir plus rapidement en présence d'une attaque. Elle permet également, dans le contexte où la troisième technique de détection met en oeuvre un renforcement par apprentissage, de contribuer à ce renforcement et rendre ainsi plus robuste et plus efficace la troisième technique de détection.

Dans un mode particulier de réalisation, l'étape de transmission au serveur est déclenchée si au moins l'une des trois conditions suivantes est vérifiée :

- condition 1 : sur détection d'un comportement anormal de l'équipement utilisateur par la troisième technique de détection ;
- condition 2 : si les niveaux de confiance attribués aux première et deuxième techniques de détection sont tous les deux inférieurs à un troisième seuil donné, par exemple inférieurs à 0.6 ; ou
- condition 3 : si un temps d'obtention par l'équipement utilisateur de la quatrième décision fournie par le serveur est inférieur à un temps d'obtention de la troisième décision par l'équipement utilisateur en exécutant lui-même la troisième technique de détection.

La condition 1 déclenchant un déport sur le serveur de la détection d'une attaque offre notamment la possibilité de détecter de nouvelles attaques, inconnues par exemple des première, deuxième et troisième techniques de détection.

La condition 2 permet à la troisième technique de détection de s'appuyer sur une autre détection lorsque les décisions des première et deuxième techniques ne sont pas considérées comme suffisamment fiables. Si la quatrième décision est en contradiction avec celles fournies par les première et deuxième techniques de détection, et en particulier si le serveur détecte une attaque alors que les deux autres techniques n'en ont pas détectée, le serveur peut envoyer un message à l'équipement utilisateur l'incitant à ne plus tenir compte des décisions fournies par ces deux techniques de détection dans sa surveillance du trafic échangée sur le réseau. De la sorte, on stoppe la progression de l'attaque au niveau de la surveillance du trafic. Si au contraire la quatrième décision est en accord avec les première et deuxième décisions, le serveur peut transmettre à la troisième technique de détection de nouvelles règles à appliquer pour renforcer son apprentissage.

La condition 3 permet d'améliorer la rapidité d'exécution de la détection d'attaques.

Notamment, dans un mode particulier de réalisation, lorsque l'étape de transmission au serveur est déclenchée parce que la condition 3 est vérifiée, l'équipement utilisateur s'abstient d'exécuter la troisième technique de détection, et la quatrième décision est utilisée pour déterminer si une attaque cible l'équipement utilisateur et le cas échéant, pour l'étape d'adaptation en remplacement de la troisième décision.

Comme mentionné précédemment, dans certaines modes de réalisation, le procédé de surveillance peut être exécuté localement dans l'équipement utilisateur.

Ainsi l'invention vise également un équipement utilisateur comprenant un dispositif de détection selon l'invention.

Toutefois, le procédé de surveillance selon l'invention peut également être distribué entre l'équipement utilisateur et un équipement distant, comme par exemple un serveur d'un réseau de télécommunications auquel est connecté notamment l'équipement utilisateur.

L'invention vise donc plus généralement un système de communication comprenant :

- un équipement utilisateur ;

- un dispositif de détection selon l'invention, configuré pour surveiller des données transitant par ledit équipement utilisateur, et exécuter une première, une deuxième et une troisième techniques de détection d'attaques informatiques ; et

- un serveur d'un réseau auquel est connecté ledit équipement utilisateur, configuré pour exécuter une quatrième technique de détection d'attaques informatiques.

Les modules du dispositif de détection selon l'invention peuvent être intégrés dans l'équipement utilisateur ou être distribués entre l'équipement utilisateur et le serveur.

L'équipement utilisateur et le système de communication selon l'invention bénéficient des mêmes avantages que le procédé de surveillance et le dispositif de détection selon l'invention.

Dans un mode particulier de réalisation de l'invention, le procédé de surveillance est mis en oeuvre par un ordinateur.

L'invention vise également un programme d'ordinateur sur un support d'enregistrement, ce programme étant susceptible d'être mis en oeuvre dans un ordinateur ou plus généralement dans un dispositif de détection conforme à l'invention et comporte des instructions adaptées à la mise en oeuvre d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du programme d'ordinateur mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution du procédé de communication, conforme à l'invention, ou du procédé de sélection, conforme à l'invention.

On peut également envisager, dans d'autres modes de réalisation, que le procédé de surveillance, le dispositif de détection, l'équipement utilisateur et le système de communication selon l'invention présentent en combinaison tout ou partie des caractéristiques précitées.

**Brève description des dessins**

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente dans son environnement, un équipement utilisateur conforme à l'invention dans un mode particulier de réalisation ;
[Fig. 2] la figure 2 représente l'architecture matérielle de l'équipement utilisateur de la figure 1, dans un mode particulier de réalisation ;
[Fig. 3] la figure 3 représente les principales étapes d'un procédé de surveillance selon l'invention, dans un mode particulier de réalisation dans lequel il est mis en oeuvre par un dispositif de détection selon l'invention, intégré dans l'équipement utilisateur de la figure 1 ; et
[Fig. 4] la figure 4 représente dans son environnement, un système de communication conforme à l'invention dans un mode particulier de réalisation.

**Description de l'invention**

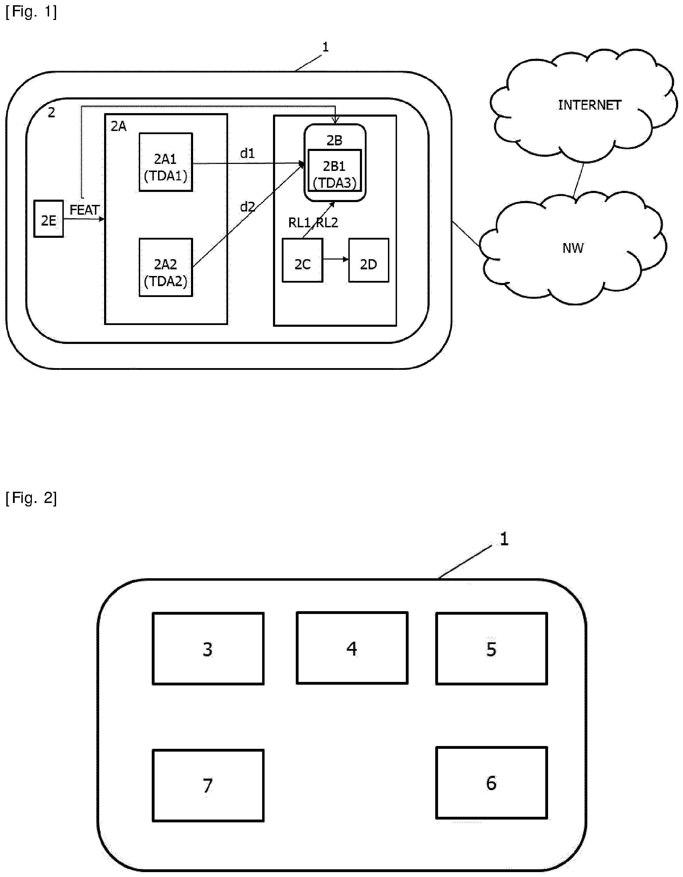

La **figure 1** illustre, dans son environnement, un équipement utilisateur 1 connecté à un réseau de communications NW, conforme à l'invention, dans un mode particulier de réalisation.

Dans l'exemple envisagé sur la figure 1, le réseau NW est un réseau de communications 5G (5ème Génération) comprenant un cœur de réseau CN auquel l'équipement utilisateur peut se connecter par l'intermédiaire d'un réseau d'accès, tel que par exemple un réseau d'accès mobile. Ces hypothèses ne sont toutefois pas limitatives et l'invention s'applique à d'autres types de réseaux, comme par exemple à des réseaux 2G, 3G ou encore 4G, à des réseaux WIFI (WIreless FIdelity), etc.

De façon connue en soi, les réseaux 5G tels que le réseau NW offrent la possibilité à une grande diversité d'équipements utilisateurs (référencés de manière générale ici par UE), de bénéficier d'une connectivité (i.e. d'être « connectés ») et d'accéder notamment au réseau public Internet. Aucune limitation n'est attachée à la nature de l'équipement utilisateur 1. Il peut s'agir d'un véhicule (ex. terrestre ou aéroporté), d'un objet IoT (pour « Internet of Things » en anglais ou encore Internet des Objets) tel qu'un capteur, une montre, etc., d'un terminal intelligent tel qu'un smartphone, une tablette numérique, un ordinateur portable, etc.

Dans le mode de réalisation décrit ici, pour protéger l'équipement utilisateur 1 contre diverses attaques informatiques (ou cyber-attaques) pouvant notamment provenir du réseau public Internet, l'équipement utilisateur 1 comprend un dispositif 2 de détection d'attaques conforme à l'invention. Le dispositif 2 de détection est configuré pour mettre en oeuvre un procédé de surveillance selon l'invention, au moyen de divers modules logiciels et/ou matériels définissant différents modules fonctionnels et notamment :

- un premier module d'obtention 2A, comprenant ici un premier sous-module 2A1 configuré pour mettre en oeuvre une première technique TDA1 de détection d'attaques informatiques, et un deuxième sous-module 2A2, configuré pour mettre en oeuvre une deuxième technique TDA2 de détection d'attaques informatiques. Le premier module d'obtention 2A est configuré pour obtenir une première décision fournie par le premier sous-module 2A1 et une deuxième décision fournie par le deuxième sous-module 2A2, ces première et deuxième décisions indiquant si les données transitant par l'équipement utilisateur 1 et destinées ou provenant du réseau NW sont associées à un trafic d'attaque informatique ;
- un deuxième module d'obtention 2B comprenant un sous-module 2B1 pour mettre en oeuvre une troisième technique TDA3 de détection d'attaques informatiques. Le deuxième module d'obtention 2B est configuré pour obtenir une troisième décision fournie par le sous-module 2B1 et indiquant si les données transitant par l'équipement utilisateur 1 et destinées ou provenant du réseau NW sont associées à un trafic d'attaque informatique. Conformément à l'invention, le sous-module 2B1 utilise pour prendre sa décision, les première et deuxième décisions fournies par les sous-modules 2A1 et 2A2, et des informations représentatives de niveaux de confiance attribués auxdites première et deuxième techniques de détection (c'est-à-dire de manière équivalente aux premier et deuxième sous-modules 2A1 et 2A2) ;
- un module de mise à jour 2C, configuré pour mettre à jour les niveaux de confiance attribués aux techniques de détection TDA1 et TDA2 en fonction des première, deuxième et troisième décisions ; et

- un module d'adaptation 2D, activé en fonction des première, deuxième et troisième décisions et des niveaux de confiance mis à jour, ce module d'adaptation étant configuré pour adapter au moins une règle appliquée par ladite première et/ou ladite deuxième techniques de détection pour fournir les première et deuxième décisions.

Dans le mode de réalisation décrit ici, le dispositif 2 de détection comprend également un module d'agrégation 2E, configuré pour agréger diverses caractéristiques représentatives du trafic de données transitant par l'équipement utilisateur 1, et destinées à être utilisées par les techniques de détection TDA1, TDA2 et TDA3 pour déterminer si l'équipement utilisateur 1 est la cible d'une attaque informatique, autrement dit, si le trafic de données transitant par l'équipement utilisateur 1 présente les caractéristiques d'un trafic affecté par une attaque informatique.

Les composants logiciels précités peuvent être intégrés à un programme d'ordinateur conforme à l'invention. L'équipement utilisateur 1 peut par exemple avoir l'architecture matérielle d'un ordinateur telle que représentée à la **figure 2,** et comprendre notamment un processeur 3, une mémoire vive 4, une mémoire morte 5, une mémoire flash non volatile 6, ainsi que des moyens de communication 7 comprenant une ou plusieurs interfaces de communication. Dans le mode de réalisation décrit ici, la mémoire morte 5 de l'équipement utilisateur 1 est un support d'enregistrement conforme à l'invention, lisible par le processeur 3 et sur lequel est enregistré un programme d'ordinateur PROG selon l'invention, qui comporte des instructions pour la mise en oeuvre d'un procédé de surveillance selon l'invention et la définition des modules 2A à 2D.

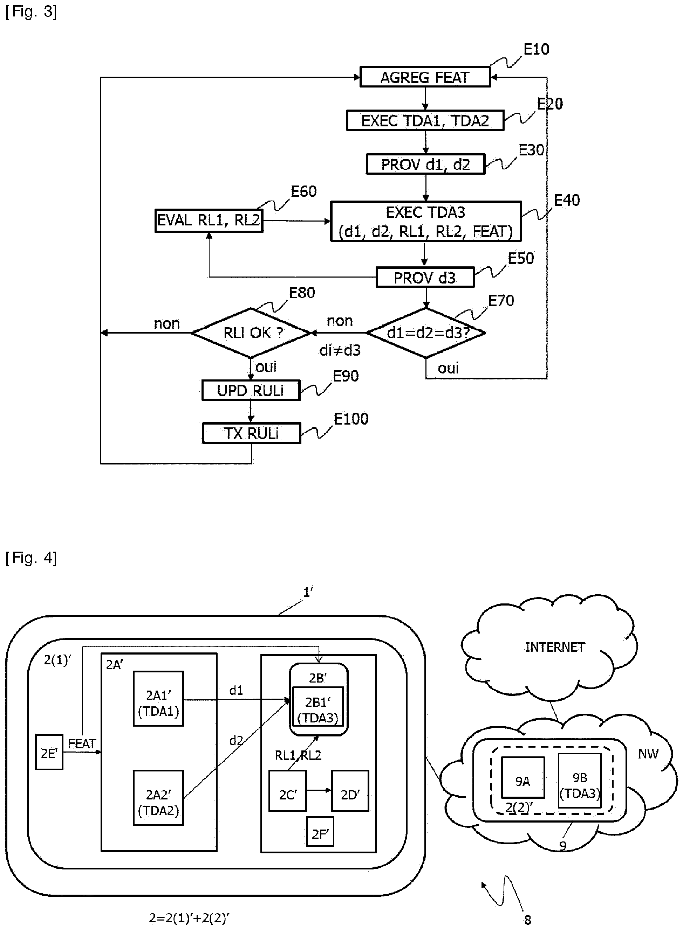

Les fonctions des modules 2A et 2D sont décrites plus en détail ultérieurement en référence à la figure 3.

On note que dans l'exemple envisagé à la figure 1, le premier module d'obtention 2A comprend deux sous-modules mettant en oeuvre deux techniques de détection d'attaques informatiques distinctes TDA1 et TDA2. On suppose par exemple ici que la technique de détection TDA1 utilise des signatures d'attaques prédéfinies, tandis que la technique de détection TDA2 utilise un modèle de comportement normal des données, établir au moyen d'un apprentissage automatique, pour déterminer si les données transitant par l'équipement utilisateur 1 présentent ou non une anomalie. De telles techniques de détection sont connues en soi et ne sont pas décrites en détail ici.

En variante, on peut envisager d'autres techniques de détection d'attaques informatiques. En outre, on peut également envisager un nombre plus importants de sous-modules mettant en oeuvre chacun une technique de détection distincte, par exemple plusieurs techniques de détection basées sur des signatures prédéfinies, ou plusieurs techniques de détection basées sur différents algorithmes d'apprentissage automatique, etc.

Par ailleurs, dans l'exemple envisagé ici, la troisième technique de détection TDA3 est une technique d'apprentissage automatique par renforcement non supervisée. Cette technique TDA3 utilise par exemple un réseau de neurones profond, une machine à vecteurs de support (ou « support vector machine » (SVM) en anglais), un réseau adversaire génératif (ou « generative adversary network » (GAN) en anglais), un algorithme de type K-means, etc. On suppose ici que la technique TDA3 a été « initialisée » avec diverses informations fournies par des experts, de façon connue en soi et non détaillée ici. Ces hypothèses ne sont pas limitatives en soi, on peut en variante utiliser d'autres techniques de détection comme par exemple une technique d'apprentissage automatique supervisée ou semi-supervisée, ou encore une technique de détection basée sur des règles prédéfinies, etc.

Il convient de noter que les décisions fournies par les techniques de détection utilisées indiquent si le trafic de données dont elles ont analysé les caractéristiques est représentatif ou non d'un trafic d'attaque, compte tenu des règles qu'elles appliquent pour identifier un tel trafic. Elles peuvent toutefois prendre des formes différentes et comprendre des informations différentes, comme la caractérisation de l'attaque détectée le cas échéant, des techniques de mitigation à appliquer en réponse à l'attaque détectée le cas échéant, etc.

La **figure 3** représente les principales étapes d'un procédé de surveillance selon l'invention dans un mode particulier de réalisation dans lequel ces étapes sont mises en oeuvre par les modules 2A à 2E du dispositif de détection 2 intégré dans l'équipement utilisateur 1. En d'autres termes, dans ce mode de réalisation, les étapes du procédé de surveillance sont mises en oeuvre localement au sein de l'équipement utilisateur 1.

Comme mentionné précédemment, l'équipement utilisateur 1 est connecté au réseau de communications NW via lequel il dispose d'une connectivité et notamment d'un accès au réseau Internet. Il est, par le biais de cet accès, vulnérable aux attaques informatiques, et notamment aux attaques informatiques propagées via le réseau Internet. De telles attaques sont acheminées jusqu'à l'équipement utilisateur 1 par l'intermédiaire des données qui lui sont destinées et peuvent être propagées par l'équipement utilisateur 1 par l'intermédiaire des données qu'il émet. Le dispositif 2 de détection est donc configuré pour surveiller les données transitant par l'équipement utilisateur 1.

A cet effet, le module d'agrégation 2E du dispositif 2 de détection agrège différentes caractéristiques du trafic de données transitant par l'équipement utilisateur 1 à un instant donné ou sur une période de temps donnée, évaluées ou mesurées par des éléments de l'équipement utilisateur 1, ou par des éléments externes à l'équipement utilisateur 1 (comme par exemple par des équipements du réseau NW ou par des noeuds voisins de l'équipement utilisateur 1) (étape E10). Ces caractéristiques du trafic, notées ici FEAT, sont évaluées ou mesurées à une fréquence déterminée sur les données transitant par l'équipement utilisateur 1 : il peut s'agir par exemple d'un nombre de paquets perdus, d'une qualité du signal reçue par l'équipement utilisateur 1, d'un temps de communication, d'un nombre de connexions de l'équipement utilisateur 1 ayant échoué, d'un nombre de paquets « inutiles » émis ou transitant par l'équipement utilisateur 1, d'un nombre de connexions erronées sur un site, etc. Elles correspondent aux caractéristiques examinées par les techniques de détection implémentées dans le dispositif 2 de détection pour déterminer si l'équipement utilisateur 1 a un comportement normal ou s'il est victime d'une attaque informatique. Elles dépendent bien entendu des techniques de détection implémentées par les sous-modules 2A1 et 2A2, mais également par le sous-module 2B1. La façon dont sont acquises ces caractéristiques est connue de l'homme du métier et n'est pas décrite en détail ici.

Les caractéristiques FEAT du trafic de données transitant par l'équipement utilisateur 1 agrégées par le module 2E du dispositif 2 de détection sont fournies par ce dernier au premier module d'obtention 2A et plus particulièrement aux sous-modules 2A1 et 2A2 mettant en oeuvre respectivement les techniques de détection TDA1 et TDA2.

Les sous-modules 2A1 et 2A2 appliquent alors respectivement les techniques de détection TDA1 et TDA2 sur les caractéristiques FEAT reçues du module d'agrégation 2E (étape E20). On note que les sous-modules 2A1 et 2A2 ne considèrent pas nécessairement en entrée les mêmes caractéristiques de trafic pour déterminer si celui-ci est ou non anormal et lié à une attaque informatique. Par souci de simplification ici, on fait référence ici aux caractéristiques FEAT de manière générale, sachant que celles-ci peuvent être sélectionnées en fonction de la configuration des techniques de détection. En outre, on note que les exécutions des techniques de détection TDA1 et TDA2 peuvent être menées en parallèle ou séquentiellement.

Chaque technique de détection TDA1, TDA2 fournit une décision, notée respectivement d1 et d2, indiquant si les données transitant par l'équipement utilisateur 1 sont représentatives ou non d'un trafic d'attaque (étape E30). Ces décisions sont transmises au deuxième module d'obtention 2B du dispositif de détection 2.

Conformément à l'invention, le module d'obtention 2B, et plus particulièrement le sous-module 2B1, prend comme entrées de la technique de détection TDA3, outre les décisions d1 et d2 fournies par les techniques de détection TDA1 et TDA2, des niveaux de confiance notés ici RL1 et RL2 attribués respectivement à chacune des techniques de détection TDA1 et TDA2 par le module de mise à jour 2C.

Dans le mode de réalisation décrit ici, ces niveaux de confiance sont compris entre 0 et 1 et initialisés à 1. Dans la convention adoptée ici, un niveau de confiance proche de 0 désigne une technique de détection peu fiable, susceptible d'être la cible d'une attaque informatique. Inversement, un niveau de confiance proche de 1 désigne une technique de détection considérée comme fiable.

Bien entendu, ces hypothèses ne sont pas limitatives en soi; d'autres conventions peuvent être envisagées (par exemple la convention inverse, ou un niveau de confiance compris entre 0 et 100%, etc.).

Plus précisément, les niveaux de confiance RL1 et RL2 sont utilisés par le dispositif de détection 2 pour estimer la fiabilité des décisions émises par les techniques de détection TDA1 et TDA2. Dans le mode de réalisation décrit ici, les règles suivantes sont appliquées par le dispositif de détection 2 :

- si le niveau de confiance RL attribué à une technique de détection TDA est compris entre 0.6 et 1, la technique de détection TDA et corrélativement, la décision qu'elle fournit, sont considérées comme fiables et de confiance ;
- si le niveau de confiance RL attribué à une technique de détection TDA est compris entre 0.2 et 0.6, la technique de détection TDA et corrélativement, la décision qu'elle fournit, sont considérées comme douteuses ou suspectes ; et
- si le niveau de confiance RL attribué à une technique de détection TDA est compris entre 0 et 0.2, la technique de détection TDA et corrélativement, la décision qu'elle fournit, sont considérées comme malicieuses, c'est-à-dire affectées par une attaque informatique.

Bien entendu, ces valeurs ne sont données qu'à titre illustratif et d'autres valeurs peuvent être envisagées suivant les techniques de détection considérées. Le réglage de ces valeurs peut être opéré expérimentalement ou par des experts. On note par ailleurs que ces valeurs peuvent évoluer dans le temps.

Les niveaux de confiance RL1 et RL2 attribués aux techniques de détection TDA1 et TDA2 sont mis à jour par le module de mise à jour 2C au fil des détections réalisées par les sous-modules 2A1 et 2A2, autrement dit, ils sont réévalués à chaque décision fournie par les modules 2A1 et 2A2, comme décrit plus en détail ultérieurement en référence à l'étape E60.

Comme mentionné précédemment, les niveaux de confiance RL1 et RL2 courants (autrement dit, ceux associés aux décisions d1 et d2 en cours d'analyse, avant mise à jour) sont fournis avec les décisions d1 et d2 au deuxième module d'obtention 2B, et plus particulièrement au sous-module 2B1, comme entrées de la technique de détection TDA3. Sont également fournies au sous-module 2B1 les caractéristiques FEAT du trafic de données agrégées par le module d'agrégation 2E utilisées par la technique de détection TDA3. On note toutefois que dans le mode de réalisation décrit ici, si le niveau de confiance RL attribué à l'une des techniques de détection est inférieur à un certain seuil (premier seuil au sens de l'invention), égal à 0.2 ici (en d'autres termes le seuil en deçà duquel une technique de détection est considérée comme malicieuse), le sous-module 2B1 désactive l'utilisation par la technique de détection TDA3 de la décision fournie par cette technique de détection. On évite ainsi de prendre en compte la décision d'une technique de détection considérée comme malicieuse.

Dans le mode de réalisation décrit ici, la technique de détection TDA3 met en oeuvre un algorithme d'apprentissage automatique par renforcement, non supervisé, pour prédire et détecter les attaques. La technique TDA3 réalise ici une classification des éléments qui lui sont fournis en entrée, en utilisant par exemple un réseau de neurones profond (ou « deep neuronal network » en anglais) connu en soi, initialisé à partir d'informations fournies par un expert (caractéristiques du trafic et décisions associées). L'apprentissage et la détection sont réalisées de façon continue (c'est-à-dire itérativement) pour chaque décision fournie par les techniques de détection TDA1 et TDA2, et de sorte à optimiser un facteur de bénéfice donné (ou « payoff » en anglais). Autrement dit, si on modélise la technique TDA3 par un ensemble de paramètres {D, F, P(D,F)}, D désignant les décisions susceptibles d'être prises par la technique TDA3 (c'est-à-dire les paramètres de sortie de la technique TDA3), F les paramètres qui lui sont fournis en entrée et P(D,F) la fonction définissant le facteur de bénéfice que l'on cherche à optimiser, à chaque itération (i.e. exécution) de la technique TDA3, la classification opérée est mise à jour de sorte à optimiser le facteur de bénéfice P(D,F) sur une fenêtre temporelle prédéterminée.

Dans cette modélisation, les paramètres d'entrée F comprennent les décisions fournies par les techniques de détection TDA1 et TDA2 et les caractéristiques FEAT considérées par la technique de détection TDA3. On peut en outre considérer d'autres paramètres d'entrée, comme par exemple des paramètres reflétant un contexte de sécurité tels que la nature des attaques détectées par les techniques de détection TDA1 et TDA2. On note que compte tenu de leurs spécificités, les techniques de détection TDA1 et TDA2 ne détectent pas nécessairement des attaques de même nature. On peut également inclure dans les paramètres d'entrée d'autres paramètres comme les instants de détection des attaques, pour conserver un historique des attaques détectées.

Les paramètres de sortie D comprennent ici deux types de décision : les décisions relatives à la présence ou non d'attaques dans le trafic caractérisé par les caractéristiques FEAT, et les décisions par rapport à la fiabilité des techniques de détection TDA1 et TDA2 (par exemple, est-ce qu'il s'agit de techniques fiables, douteuses ou malicieuses).

Dans le mode de réalisation décrit ici, à chaque itération (désignée par i dans la suite), la technique de détection TDA3 vérifie si les paramètres de sortie D (décisions) ont évolué compte tenu des paramètres d'entrée F qui lui sont fournis. Si les décisions sont restées inchangées, le facteur de bénéfice est augmenté ici pour l'itération i considérée suivant la relation : $P_i(D,F)=[P_{i-1}(D,F)+1]/N(TDA3)$ où $N(TDA3)$ désigne le nombre total d'attaques détectées par la troisième technique de détection TDA3. Sinon, le facteur de bénéfice pour l'itération i considérée est diminué suivant la relation : $P_i(D,F)=[P_{i-1}(D,F)-1]/N(TDA3)$. L'apprentissage est réalisé de façon continue (i.e. à chaque itération) ; il peut être suspendu au bout d'un certain nombre d'itérations x, dès lors que l'ensemble des paramètres (D,F) restent inchangés sur ces x itérations successives ou sur une période de temps donnée.

Au bout d'une période de temps prédéfinie, notée ici T, T correspondant à l'exécution d'un nombre Niter itérations (Niter désignant un entier choisi supérieur à 1, par exemple Niter égal à 100 ou 150), la valeur du facteur de bénéfice pour la période de temps suivante est estimée en utilisant ici la relation suivante (kT étant utilisé pour indexer la période de temps courante et (k+1)T la période suivante, k désignant un entier supérieur ou égal à 0, et $P_{Niter}(D,F)_{kT}$ désignant la valeur du facteur de bénéfice obtenue à l'issue de la période de temps indexée par kT, en d'autres termes à l'itération Niter exécutée sur cette période) :

$$P(D,F)_{(k+1)T}=P_{Niter}(D,F)_{kT}+\alpha(\beta\ P_{Niter}(D,F)_{kT}-P_{Niter-1}(D,F)_{kT})$$

où $\alpha$ et $\beta$ désignent des nombres réels compris entre 0 et 1 ($\alpha,\beta\neq0$ et $\alpha,\beta\neq1$) correspondant respectivement au taux d'apprentissage et au facteur d'actualisation de l'algorithme d'apprentissage mis en oeuvre par la technique de détection TDA3. On note que le facteur de payoff peut être initialisé à une valeur arbitraire, par exemple 0.5, ou si l'environnement dans lequel se trouve l'équipement utilisateur UE est peu sécurisé, on peut envisager de l'initialiser à 0.

La valeur du facteur de bénéfice ainsi prédite $P(D,F)_{(k+1)T}$ est utilisée pour déterminer la précision de la technique de détection TDA3 par rapport à une précision attendue ou souhaitée (par exemple un facteur de bénéfice égal à 1). Si au bout de x itérations, cette valeur n'évolue plus, cela signifie que la technique de détection TDA3 a obtenu sa précision maximale. Si celle-ci ne correspond pas à la précision attendue, une intervention extérieure peut être déclenchée pour renforcer l'apprentissage (par exemple, une intervention humaine d'un expert ou l'intervention d'une autre technique de détection par apprentissage automatique, etc.).

A chaque itération, en parallèle de l'apprentissage par renforcement qui est effectué, la technique de détection TDA3 fournit une décision d3 indiquant si les données représentées par les caractéristiques FEAT qu'elle a considérées sont associées ou non à un trafic d'attaque informatique (étape E50).

Cette décision d3 est utilisée pour vérifier la fiabilité des décisions des techniques de détection TDA1 et TDA2, et renforcer si besoin l'efficacité de ces deux techniques de détection si elles sont considérées comme fiables en mettant à jour les règles qu'elles utilisent.

Plus spécifiquement, dans un premier temps, les niveaux de confiance attribués aux techniques de détection TDA1 et TDA2 sont mis à jour en utilisant la décision d3 et les décisions d1 et d2 (étape E60).

Dans le mode de réalisation décrit ici, le niveau de confiance RL (RL=RL1 ou RL2) attribué à une technique de détection TDA (TDA=TDA1 ou TDA2) est défini comme le ratio entre :

- la différence entre le nombre total d'attaques noté N(TDA) détectées par la technique de détection et le nombre total F(TDA) de faux positifs et de faux négatifs attribués à cette technique de détection ; et
- le nombre total d'attaques N(TDA3) détectées par la troisième technique de détection TDA3 à partir du même trafic de données ;
  soit :

$$RL=[N(TDA)-F(TDA)]/N(TDA3)$$

L'évaluation des niveaux de confiance s'appuie donc sur la comparaison des décisions d1 et d2 fournies par les techniques de détection TDA1 et TDA2 avec la décision d3 fournie par la technique de détection TDA3, ces trois décisions ayant été élaborées à partir des caractéristiques FEAT du trafic transitant par l'équipement utilisateur 1 à un instant donné ou sur une période de temps donnée.

Plus particulièrement, on note que dans la relation ci-dessus, le ratio N(TDA)/N(TDA3) traduit en quelque sorte la « bonne » réputation que l'on alloue à la technique de détection TDA : la technique de détection TDA est d'autant plus fiable qu'elle fournit des décisions quant au trafic (représentatif d'une attaque ou pas) similaires à celles fournies par la technique de détection TDA3 que l'on considère comme référence.

Inversement, le ratio F(TDA)/N(TDA3) traduit la « mauvaise » réputation que l'on alloue à la technique de détection TDA : cette mauvaise réputation provient des mauvaises détections réalisées par la technique de détection TDA, autrement dit, tous les faux positifs et les faux négatifs. Le nombre de fausses ou mauvaises détections opérées par la technique de détection TDA est estimé ici par rapport aux décisions fournies par la technique de détection de référence TDA3 et par les autres techniques de détection implémentées par le dispositif de détection 2 et distinctes de la technique de détection TDA, par exemple en appliquant un mécanisme de vote à la majorité. Ainsi, à titre illustratif, si la majorité des techniques de détection ont détecté une attaque (respectivement n'ont pas détecté d'attaque) alors que la technique de détection TDA n'en a pas détecté (respectivement alors que la technique de détection TDA en a détecté une), on considère que la technique de détection TDA a effectué une mauvaise détection (i.e. on lui associe un faux négatif, respectivement un faux positif). En variante, on peut estimer les fausses détections réalisées par chacune des techniques de détection TDA1 et TDA2 de manière différente (par exemple en ne tenant compte que de la décision d3 de la technique de décision TDA3).

Comme mentionné précédemment, on envisage ici un niveau de confiance compris entre 0 et 1, si bien que si en appliquant la définition énoncée ci-dessus, le module de mise à jour 2C obtient un niveau de confiance inférieur à 0, il force le niveau de confiance à la valeur 0 ; de façon similaire, si un niveau de confiance supérieur à 1 est obtenu, celui-ci est forcé à la valeur 1.

Par exemple le niveau de confiance peut être défini par un niveau de bonne réputation (ou inversement de mauvaise réputation), correspondant au nombre de décisions coïncidant avec les décisions émises par la troisième technique de détection (inversement distinctes des décisions émises par la troisième technique de détection).

Les niveaux de confiance RL1 et RL2 mis à jour, ainsi que les décisions d1, d2 et d3 sont fournis au module d'adaptation 2D.

Celui compare les décisions d1 et d2 avec la décision d3.

Si les trois décisions sont identiques ou tout du moins indiquent toutes les trois que les données transitant par l'équipement utilisateur 1 sont représentatives d'un trafic d'attaques (réponse oui à l'étape test E70), le module d'adaptation 2D n'active pas ici d'adaptation (c'est-à-dire de mise à jour) des règles (retour à l'étape E10, et une nouvelle « itération » du procédé de surveillance est enclenchée).

Si l'une au moins des décisions d1 et/ou d2 est différente de la décision d3 ou tout du moins si l'une au moins des décisions d1 et/ou d2 indique(nt) la présence d'une attaque alors que d3 indique le contraire, ou si l'une au moins des décisions d1 et/ou d2 indique(nt) l'absence d'attaque alors que d3 en a détecté une, le module d'adaptation 2D examine le niveau de confiance mis à jour attribué à la technique de détection ayant émis une décision erronée par rapport à d3 (étape test E80). On note par la suite di la décision erronée et TDAi la technique de détection à l'origine de cette décision erronée, i pouvant être égal, dans l'exemple envisagé ici, à 1 ou 2.

Si le niveau de confiance RLi mis à jour attribué à la technique de détection TDAi révèle une technique de détection fiable (réponse oui à l'étape test E80), en d'autres termes dans l'exemple envisagé ici est supérieur à 0.6 (deuxième seuil au sens de l'invention), le module d'adaptation 2D déclenche l'adaptation des règles utilisées par la technique de détection TDAi à partir des règles appliquées pour la détection par la technique de détection TDA3 ou fournies par une technique d'apprentissage automatique plus efficace, située par exemple sur une machine distante, distincte de l'équipement utilisateur 1 (dans un serveur du réseau par exemple), ou déterminées via une intervention humaine par des experts (étape E90). L'adaptation des règles de la technique de détection TDAi peut comprendre par exemple la fourniture de nouvelles caractéristiques à considérer pour la détection, de nouvelles signatures (par exemple si une attaque inconnue de la technique de détection TDAi a été détectée par la technique de détection TDA3), etc. Les règles ainsi adaptées (notées RULi sur la figure 3) sont alors transmises par le module d'adaptation 2D au module mettant en oeuvre la technique de détection TDAi (étape E100).

La technique de détection TDAi utilise alors ces règles adaptées lors de sa prochaine exécution (retour à l'étape E10 et une nouvelle « itération » du procédé de surveillance est enclenchée).

Si le niveau de confiance RLi mis à jour attribué à la technique de détection TDAi révèle une technique de détection douteuse ou malicieuse (réponse non à l'étape test E80), en d'autres termes dans l'exemple envisagé ici est inférieur à 0.6 (deuxième seuil au sens de l'invention), le module d'adaptation 2D ne procède à aucune adaptation des règles utilisées par la technique de détection TDAi (retour à l'étape E10 et une nouvelle « itération » du procédé de surveillance est enclenchée). En procédant de la sorte, l'invention exploite le fait que la technique de détection TDAi n'étant pas mise à jour, elle va continuer de fournir des décisions erronées, voir son niveau de confiance baisser au fil des détections pour être « éjectée » automatiquement du processus de surveillance dès lors que ce niveau de confiance sera inférieur ici à 0.2 (premier seuil au sens de l'invention). En d'autres termes, la technique de décision fautive est contrainte de corriger ses décisions si elle veut encore participer à la surveillance des données transitant par l'équipement utilisateur 1.

Dans le mode de réalisation qui vient d'être décrit, toutes les étapes du procédé de surveillance sont mises en oeuvre localement au niveau de l'équipement utilisateur 1. Dans un autre mode de réalisation, on peut envisager que le procédé de surveillance fasse appel à un équipement distant pour la mise à œuvre de certaines étapes, par exemple à un serveur du réseau NW auquel est connecté l'équipement utilisateur 1, tel qu'un serveur MEC se trouvant à proximité de l'équipement utilisateur 1. En d'autres termes, dans ce mode de réalisation, le dispositif de détection comprend des modules répartis sur l'équipement utilisateur et sur le serveur. L'équipement utilisateur, le dispositif de détection et le serveur forment un système de communication conforme à l'invention. La **figure 4** illustre un tel système de communication : sur la figure 4, le système de communication est référencé par 8, l'équipement utilisateur par 1', le dispositif de détection par 2' et le serveur par 9. On note que préférentiellement, le serveur 9 gère une pluralité d'équipements utilisateur mettant en œuvre l'invention au même titre que l'équipement utilisateur 1' (non représentés sur la figure 4 par souci de simplification).

Dans le mode de réalisation représenté sur la figure 4, la partie 2'(1) du dispositif de détection 2' intégrée dans l'équipement utilisateur 1'comprend des modules 2A' (ainsi que des sous-modules 2A1' et 2A2'), 2B' (ainsi qu'un sous-module 2B1'), 2C', 2D' et 2E', similaires ou identiques aux modules 2A, 2B, 2C, 2D et 2E de l'équipement utilisateur 1, précédemment décrits. Il comprend en outre un module 2F' d'échanges, configuré pour échanger des informations avec le serveur 9. Ce module 2F' d'échanges peut s'appuyer notamment sur le module de communication 7 de l'équipement utilisateur 1.

Dans le mode de réalisation représenté à la figure 4, le serveur 9 comprend un module 9A d'échanges configuré pour échanger des informations avec l'équipement utilisateur 1 (et avec d'autres équipements utilisateur), et un module 9B configuré pour exécuter une quatrième technique de détection, notée TDA4, distincte des techniques de détection TDA1, TDA2 et TDA3. Le serveur 9 se trouvant dans le réseau, il peut disposer plus facilement de davantage de ressources matérielles et logicielles que l'équipement utilisateur 1'. La quatrième technique de détection TDA4 peut donc être avantageusement plus robuste et plus précise que les techniques de détection TDA1, TDA2 et TDA3 embarquées dans l'équipement utilisateur 1'. Par exemple, la technique de détection TDA4 est un algorithme d'apprentissage automatique. Les modules 9A et 9B appartiennent à une partie 2'(2) du dispositif de détection 2' déportée sur le serveur 9. En outre, le serveur 9 étant connecté à plusieurs équipements utilisateur similaires à l'équipement utilisateur 1', il peut bénéficier d'informations provenant de ces équipements utilisateur sur le contexte de sécurité dans lequel se trouve l'équipement utilisateur 1' (mode de surveillance collaboratif).

Les étapes du procédé de surveillance mises en œuvre par le dispositif de détection 2' sont identiques ou similaires aux étapes précédemment décrites en référence à la figure 3. Toutefois, pour exploiter les propriétés de la quatrième technique de détection TDA4 mise en œuvre par le serveur 9, le module d'échanges 2F' transmet au module 9A du serveur 9 les caractéristiques agrégées FEAT des données transitant par l'équipement utilisateur 1' (au moins celles utilisées par la technique de détection TDA4). Le module 9B déclenche l'exécution de la quatrième technique de détection TDA4. On note que lors de l'exécution de la quatrième technique de détection TDA4, le module 9B peut considérer d'autres caractéristiques du trafic transitant par l'équipement utilisateur 1', acquises grâce à sa position « centrale » dans le réseau NW et sa plus grande visibilité sur les données échangées dans le réseau NW et au niveau des équipements utilisateurs connectés à ce dernier.

Il en résulte une quatrième décision notée d4 fournie par la technique de détection TDA4 indiquant si les données correspondant aux caractéristiques FEAT qui lui ont été fournies sont représentatives d'un trafic d'attaque ou non.

La quatrième décision d4 est transmise via le module d'échanges 9A à l'équipement utilisateur l'et plus particulièrement aux modules de mise à jour 2C' et au module d'adaptation 2D' du dispositif de détection 2'. La quatrième décision d4 peut être accompagnée de nouvelles règles de détection destinées aux techniques de détection TDA1, TDA2 et/ou TDA3. Le serveur 9 disposant de plus d'informations que les techniques de détection TDA1, TDA2 et TDA3 et mettant en œuvre une technique de détection plus précise et plus robuste, il peut être en mesure de détecter des comportements anormaux des données transitant par l'équipement utilisateur 1 et/ou des attaques jusqu'alors inconnu(e)s des techniques de détection TDA1, TDA2 et/ou TDA3.

L'étape E70 de mise à jour des niveaux de confiance du procédé de surveillance tient alors compte de la quatrième décision d4, au même titre que la troisième décision d3, pour mettre à jour les niveaux de confiance.

De même, l'étape d'adaptation E100 des règles appliquées par la technique de détection TDAi ayant fournie une décision erronée tient compte de la quatrième décision, au même titre que la troisième décision, et le cas échéant des nouvelles règles de détection transmises par le serveur 9.

Dans un mode particulier de réalisation, la sollicitation du serveur 9 pour exécuter la quatrième technique de détection TDA4, et la transmission des caractéristiques FEAT au serveur 9 à cet effet, peuvent être déclenchées sur détection par l'équipement utilisateur 1' d'un événement déterminé. Un tel événement est par exemple la détection que l'une des conditions suivantes est vérifiée :

- condition 1 : comportement anormal de l'équipement utilisateur 1 par la troisième technique de détection TDA3 à partir des caractéristiques FEAT. Par exemple, la décision d3 fournie par la troisième technique de détection TDA3 indique que l'équipement utilisateur 1 est affecté par une attaque ou que l'une des techniques de détection TDA1 ou TDA2 est malicieuse ou suspecte ;
- condition 2 : niveaux de confiance RL1 et RL2 attribués aux première et deuxième techniques de détection TDA1 et TDA2 tous les deux inférieurs à un seuil donné (troisième seuil au sens de l'invention). Par exemple, ce seuil est pris égal à 0.6, en d'autres termes la condition 2 est équivalente à vérifier si les deux techniques de détection sont suspectes ou malicieuses ;
- condition 3 : temps d'obtention par l'équipement utilisateur 1' de la quatrième décision d4 fournie par le serveur 9 (qui comprend le temps de transmission des caractéristiques FEAT au serveur 9, le temps d'exécution de la technique de détection TDA4 et le temps de transmission de la décision d4 à l'équipement utilisateur 1') inférieur à un temps d'obtention de la troisième décision d3 par l'équipement utilisateur l'en exécutant lui-même la troisième technique de détection TDA3. Le temps d'obtention de la décision d4 peut varier en fonction du nombre de caractéristiques FEAT transmises au serveur 9. Pour estimer ce temps d'obtention de la décision d4, l'équipement utilisateur 1' peut utiliser des informations représentatives des ressources matérielles et logicielles du serveur 9 (en particulier concernant à la technique de détection TDA4 exécutée par le serveur 9) avec lesquelles il a été configuré préalablement. Ces informations lui permettent de déterminer à partir des caractéristiques qu'il envoie au serveur 9, le temps qu'il va falloir à ce dernier pour exécuter la technique de détection TDA4 et fournir une décision d4, ainsi que les temps de transmission des caractéristiques de l'équipement utilisateur l'vers le serveur 9 et de la décision d4 du serveur 9 vers l'équipement utilisateur 1'.

On note que lorsque c'est la condition 2 qui déclenche la sollicitation du serveur 9, le module d'échanges 2F' de l'équipement utilisateur 1' transmet également au module d'échanges 9A du serveur 9, en plus des caractéristiques FEAT, sa propre décision d3, ainsi que les niveaux de confiance attribués aux techniques de détection TDA1 et TDA2, pour confirmation par le serveur 9 que les techniques de détection TDA1 et TDA2 sont suspectes ou malicieuses. Lorsque le serveur 9 confirme cette qualification des techniques de détection TDA1 et TDA2 (ou au moins pour l'une d'entre elles), il peut en outre demander à l'équipement utilisateur 1' de stopper l'utilisation de ces techniques de détection. La technique de détection TDA3 se base alors sur les seules caractéristiques FEAT pour prendre sa décision quant à la présence ou non d'une attaque.

Si au contraire, le serveur 9, après exécution de la technique de détection TDA4, détermine que les techniques de détection TDA1 et TDA2 sont fiables, il peut envoyer au module 2B1' mettant en oeuvre la troisième technique de détection TDA3 via le module d'échanges 2F', de nouvelles règles à appliquer pour la détection. Ces nouvelles règles ont vocation à renforcer l'apprentissage de la troisième technique de détection TDA3 (celle-ci ayant fourni une mauvaise décision contrairement aux techniques de détection TDA1 et TDA2). Sur réception de ces nouvelles règles, le module de mise à jour 2C peut réévaluer les niveaux de confiance attribués aux techniques de détection TDA1 et TDA2.

Dans une variante de réalisation, le serveur 9 peut également attribuer à la technique de détection TDA3 un niveau de confiance (en procédant de façon similaire ou identique au module de mise à jour 2C' pour les techniques de détection TDA1 et TDA2), et mettre à jour ce niveau de confiance à chaque sollicitation par l'équipement utilisateur 1'. Si le niveau de confiance attribué à la technique de détection TDA3 laisse suspecter au serveur 9 que celle-ci est suspecte ou malicieuse, il peut décider de déconnecter l'équipement utilisateur 1' du réseau, son comportement étant jugé anormal.

Lorsque c'est la condition 3 qui déclenche la sollicitation du serveur 9, le module 2B1' n'exécute par la technique de détection TDA3 par souci d'efficacité. La quatrième décision d4 est alors utilisée en remplacement de la troisième décision d3 pour l'étape de mise à jour des niveaux de confiance attribués aux techniques de détection TDA1 et TDA2 et le cas échéant, pour l'adaptation des règles utilisées par ces techniques de détection.

**Revendications**

1. Procédé de surveillance, par un dispositif (2,2') de détection d'attaques informatiques, de données transitant par un équipement utilisateur (1), ledit procédé comprenant :

   - une étape d'obtention (E20,E30) d'au moins une première décision (d1) fournie par une première technique de détection (TDA1) d'attaques informatiques et une deuxième décision (d2) fournie par une deuxième technique de détection (TDA2) d'attaques informatiques, lesdites première et deuxième décisions indiquant si lesdites données sont associées à un trafic d'attaque informatique ;
   - une étape d'obtention (E40,E60) d'une troisième décision (d3) fournie par une troisième technique de détection d'attaques informatiques (TDA3) indiquant si lesdites données sont associées à un trafic d'attaque informatique, ladite troisième technique de détection utilisant pour fournir ladite troisième décision (d3), les première et deuxième décisions et des informations représentatives de niveaux de confiance (RL1,RL2) attribués auxdites première et deuxième techniques de détection ;
   - une étape de mise à jour (E70) des niveaux de confiance attribués aux première et deuxième techniques de détection en fonction des première, deuxième et troisième décisions obtenues ; et
   - une étape (E100), déclenchée en fonction des première, deuxième et troisième décisions obtenues et des niveaux de confiance mis à jour, d'adaptation d'au moins une règle appliquée par ladite première et/ou ladite deuxième techniques de détection pour fournir les première et deuxième décisions.

2. Procédé de surveillance selon la revendication 1 comprenant une étape de désactivation de l'utilisation par la troisième technique de détection de la décision fournie par la première, respectivement par la deuxième, technique de détection si le niveau de confiance attribué à la première, respectivement à la deuxième, technique de détection est inférieur à un premier seuil donné.

3. Procédé de surveillance selon la revendication 2 dans lequel le premier seuil est inférieur ou égal à 0.2.

4. Procédé de surveillance selon l'une quelconque des revendications 1 à 3 dans lequel l'étape d'adaptation (E100) d'au moins une règle appliquée par la première, respectivement par la deuxième, technique de détection est déclenchée seulement si le niveau de confiance mis à jour attribué à la première, respectivement à la deuxième, technique de détection est supérieur à un deuxième seuil donné (E90).

5. Procédé de surveillance selon l'une quelconque des revendications 1 à 4 dans lequel le niveau de confiance (RL1,RL2) attribué à la première, respectivement à la deuxième, technique de détection est défini comme le ratio entre :

   - une différence entre un nombre total d'attaques détectées par la première, respectivement par la deuxième, technique de détection et un nombre total de faux positifs et de faux négatifs attribués à la première, respectivement à la deuxième, technique de détection ; et
   - un nombre total d'attaques détectées par la troisième technique de détection.

6. Procédé de surveillance selon l'une quelconque des revendications 1 à 5 dans lequel, pour fournir leurs décisions :

   - la première technique de détection (TDA1) utilise des signatures d'attaques prédéfinies ; et
   - la deuxième technique de détection (TDA2) utilise au moins un modèle d'un comportement normal des données.

7. Procédé de surveillance selon l'une quelconques des revendications 1 à 6 dans lequel la troisième technique de détection (TDA3) met en oeuvre un apprentissage par renforcement.

8. Procédé de surveillance selon la revendication 7 dans lequel, au cours de l'apprentissage par renforcement, des paramètres d'entrée et/ou de sortie de la troisième technique de détection sont ajustés de sorte à maximiser un facteur de bénéfice prédéfini.

9. Procédé de surveillance selon l'une quelconque des revendications 1 à 8 dans lequel les étapes d'obtention, de mise à jour et le cas échéant d'adaptation sont mises en oeuvre au sein dudit équipement utilisateur, ledit procédé comprenant en outre :

- une étape de transmission à un serveur (9) d'un réseau (NW) auquel est connecté ledit équipement utilisateur, configuré pour exécuter une quatrième technique de détection d'attaques informatiques, de caractéristiques représentatives desdites données sur lesquelles appliquer ladite quatrième technique de détection ;
- une étape d'obtention d'une quatrième décision (d4) fournie par ledit serveur après application de ladite quatrième technique de détection, et indiquant si lesdites données sont représentatives d'un trafic d'attaque informatique ;

l'étape de mise à jour des niveaux de confiance et le cas échéant, d'adaptation étant réalisées en fonction également de la quatrième décision.

10. Procédé de surveillance selon la revendication 9 dans lequel l'étape de transmission audit serveur (9) est déclenchée :

- sur détection d'un comportement anormal dudit équipement utilisateur par la troisième technique de détection ;
- si les niveaux de confiance attribués aux première et deuxième techniques de détection sont tous les deux inférieurs à un troisième seuil donné ; ou
- si un temps d'obtention par l'équipement utilisateur de la quatrième décision fournie par le serveur est inférieur à un temps d'obtention de la troisième décision par l'équipement utilisateur en exécutant lui-même la troisième technique de détection.

11. Procédé de surveillance selon la revendication 10 dans lequel lorsque l'étape de transmission audit serveur est déclenchée parce que le temps d'obtention par l'équipement utilisateur de la quatrième décision fournie par le serveur est inférieur au temps d'obtention de la troisième décision par l'équipement utilisateur en exécutant lui-même la troisième technique de détection, l'équipement utilisateur n'exécute pas la troisième technique de détection, et la quatrième décision est utilisée pour l'étape de mise à jour en remplacement de la troisième décision.

12. Dispositif (2,2') de détection d'attaques informatiques, configuré pour surveiller des données transitant par un équipement utilisateur, ledit dispositif comprenant :

- un premier module d'obtention (2A,2A'), configuré pour obtenir au moins une première décision fournie par une première technique de détection d'attaques informatiques et une deuxième décision fournie par une deuxième technique de détection d'attaques informatiques, lesdites première et deuxième décision indiquant si lesdites données sont associées à un trafic d'attaque informatique ;
- un deuxième module d'obtention (2B,2B'), configuré pour obtenir une troisième décision fournie par une troisième technique de détection indiquant si lesdites données sont associées à un trafic d'attaque informatique, ladite troisième technique de détection utilisant pour fournir ladite troisième décision, les première et deuxième décisions et des informations représentatives de niveaux de confiance attribués auxdites première et deuxième techniques de détection ;
- un module de mise à jour (2C,2C'), configuré pour mettre à jour les niveaux de confiance attribués aux première et deuxième techniques de détection en fonction des première, deuxième et troisième décisions ; et
- un module d'adaptation (2D,2D'), activé en fonction des première, deuxième et troisième décisions et des niveaux de confiance mis à jour, ledit module étant configuré pour adapter au moins une règle appliquée par ladite première et/ou ladite deuxième techniques de détection pour fournir les première et deuxième décisions.

13. Equipement utilisateur (1,1') comprenant un dispositif de détection (2,2') selon la revendication 12.

14. Système de communication (8) comprenant :

- un équipement utilisateur (1') ;
- un dispositif de détection (2') selon la revendication 12, configuré pour surveiller des données transitant par ledit équipement utilisateur, et exécuter une première, une deuxième et une troisième techniques de détection d'attaques informatiques ; et
- un serveur (9) d'un réseau auquel est connecté ledit équipement utilisateur, configuré pour exécuter une quatrième technique de détection d'attaques informatiques.

**15.** Programme d'ordinateur comportant des instructions pour l'exécution d'un procédé de surveillance selon l'une quelconque des revendications 1 à 11, lorsque ledit programme est exécuté par un ordinateur.

[Fig. 1]

[Fig. 2]

[Fig. 3]

[Fig. 4]

Europäisches
Patentamt

European
Patent Office

Office européen
des brevets

**RAPPORT DE RECHERCHE EUROPEENNE**

Numéro de la demande

EP 20 21 2449

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/163900 A1 (ZHANG ZHENG [US] ET AL) 30 mai 2019 (2019-05-30) * alinéa [0010] - alinéa [0050]; figures 3,8 * | 1-15 | INV. G06F21/55 G06F21/56 H04L29/06 |
| A | EP 3 226 169 A1 (ACCENTURE GLOBAL SOLUTIONS LTD [IE]) 4 octobre 2017 (2017-10-04) * alinéa [0067] - alinéa [0073]; figure 5 * | 1-15 | |
| A | ABDUVALIYEV A ET AL: "Energy efficient hybrid intrusion detection system for wireless sensor networks", ELECTRONICS AND INFORMATION ENGINEERING (ICEIE), 2010 INTERNATIONAL CONFERENCE ON, IEEE, PISCATAWAY, NJ, USA, 1 août 2010 (2010-08-01), pages V2-25, XP031744127, ISBN: 978-1-4244-7679-4 * Section III * | 1-15 | |

DOMAINES TECHNIQUES RECHERCHES (IPC)

G06F
H04L

Le présent rapport a été établi pour toutes les revendications

| Lieu de la recherche | Date d'achèvement de la recherche | Examinateur |
|---|---|---|
| Munich | 14 janvier 2021 | Jardak, Christine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 21 2449

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-2021

| Document brevet cité au rapport de recherche | | Date de publication | Membre(s) de la famille de brevet(s) | | Date de publication |
|---|---|---|---|---|---|
| US 2019163900 | A1 | 30-05-2019 | AUCUN | | |
| EP 3226169 | A1 | 04-10-2017 | AU | 2017201870 A1 | 12-10-2017 |
| | | | AU | 2018229445 A1 | 04-10-2018 |
| | | | EP | 3226169 A1 | 04-10-2017 |
| | | | US | 2017279818 A1 | 28-09-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. ABDUVALIYEV et al.** Energy Efficient Hybrid Intrusion Detection System for Wireless Sensor Networks. *International Conference on Electronics and Information Engineering,* 2010

- **D. SERPANOS et al.** Secure Memory for embedded tamper-proof systems. *14th International Conference on Design and Technology of Integrated Systems in Nanoscale Era,* Avril 2019